# EUROPÄISCHE PATENTSCHRIFT

(11) **EP 3 560 692 B1**
(45) Veröffentlichungstag und Bekanntmachung des Hinweises auf die Patenterteilung: **20.01.2021**
(21) Anmeldenummer: 19160702.7
(22) Anmeldetag: 05.03.2019
(51) Int. Cl.: B29C 70/36, B29C 70/22, B29C 51/10, B29C 51/14, B29C 51/36, B29B 11/12, B29C 65/00, B29D 99/00, B29B 11/16, B29C 70/44, B29K 105/00

(54) **VERFAHREN ZUM HERSTELLEN EINES DREIDIMENSIONALEN VORFORMLINGS AUS VERSTÄRKUNGSFASERN**
METHOD FOR PRODUCING A THREE-DIMENSIONAL PREFORM MADE OF REINFORCING FIBRES
PROCÉDÉ DE FABRICATION D'UNE PRÉFORME TRIDIMENSIONNELLE DE FIBRES DE RENFORT

(30) Priorität: 26.04.2018 DE 102018110123
(43) Veröffentlichungstag der Anmeldung: 30.10.2019
(73) Patentinhaber: Airbus Operations GmbH, 21129 Hamburg (DE)
(72) Erfinder: Sdunnus, Thore, 20259 Hamburg (DE); Gillessen, Alexander, 21682 Stade (DE)

(56) Entgegenhaltungen:
- WO-A1-2013/064187
- DE-B3-102008 001 498
- US-A1- 2012 061 006

## Beschreibung

### TECHNISCHES GEBIET

Die Erfindung betrifft ein Verfahren zum Herstellen eines dreidimensionalen Vorformlings aus Verstärkungsfasern zum Herstellen eines Bauteils aus einem faserverstärkten Kunststoff. Die Erfindung betrifft ferner eine Vorrichtung zum Herstellen eines dreidimensionalen Vorformlings aus Verstärkungsfasern.

### HINTERGRUND DER ERFINDUNG

Zur Gewichtsreduktion werden oftmals in Verkehrsflugzeugen und anderen Fahrzeugen Bauteile aus faserverstärkten Kunststoffen eingesetzt. Diese könnten etwa aus Kohlenstofffasern bestehen, die in ein Matrixmaterial eingebettet und ausgehärtet werden. Es sind Verfahren bekannt, bei denen vorgeformte Faserhalbzeuge mit einem Matrixmaterial getränkt werden, wobei das Tränken beispielsweise durch ein Vakuuminfusionsverfahren erfolgt. Hierzu ist erforderlich, dass die Vorformlinge aus Fasern bereits die gewünschte Produktform aufweisen und eine gewisse Eigenstabilität besitzen.

Während ein Vakuuminfusionsverfahren gewisse Vorteile für die industrielle Fertigung von Bauteilen aus faserverstärkten Kunststoffen aufweist, kann das Anfertigen von komplexer geformten, dreidimensionalen Vorformlingen in einem industriellen Maßstab unter Verwendung insbesondere von ungewebten Fasergelegen schwierig sein. Es existieren derzeit keine Verfahren, Vorformlinge für Versteifungsbauteile oder ähnliche Komponenten, die einen T-förmigen Profilquerschnitt aufweisen, in einem fließenden Umformprozess herzustellen.

DE 10 2008 028 865 A1 zeigt etwa ein Verfahren zum Herstellen eines Vorformlings, der entsprechend einer gewünschten Krümmung und/oder Torsion des herzustellenden Profilbauteils krümmbar bzw. tordierbar ist, wobei das Verfahren das Einbringen von Formkernteilen umfasst und die verwendeten Fasern in Prepregs eingebettet sind.

WO 2013/064187 A1 offenbart ein System zum Formen von laminaren Verbundwerkstoffen, umfassend eine Basis mit mindestens einem länglichen Dornelement, das eine Form aufweist, die einem Verbundlaminat zu geben ist, das auf dem Dornelement angeordnet ist, wobei mindestens eine rollformende Druckvorrichtung vorgesehen ist.

### ZUSAMMENFASSUNG DER ERFINDUNG

Die Aufgabe der Erfindung liegt folglich darin, ein Verfahren zum Herstellen eines dreidimensionalen Vorformlings (Preform) aus Verstärkungsfasern vorzuschlagen, welches auch bei Verwendung von ungewebten Verstärkungsfasergelegen möglichst gut automatisiert durchführbar ist und das auch eine komplexere dreidimensionale Struktur des Vorformlings erlaubt.

Die Aufgabe wird gelöst durch ein Verfahren mit den Merkmalen des unabhängigen Anspruchs sowie einer Vorrichtung mit den Merkmalen des unabhängigen Anspruchs 11. Vorteilhafte Weiterbildungen und Ausführungsformen sind den Unteransprüchen und der nachfolgenden Beschreibung zu entnehmen.

Es wird ein Verfahren zum Herstellen eines dreidimensionalen Vorformlings aus Verstärkungsfasern zum Herstellen eines Bauteils aus einem faserverstärkten Kunststoff vorgeschlagen, wobei das Verfahren die Schritte des Einbringens mindestens einer Bindemittel aufweisenden Faserlage in eine Drapierform, des Umformens der mindestens einen Faserlage durch mindestens ein Umformelement, das entlang der Drapierform verfahrbar ist, des Aufbringens einer luftdichten Folie auf die mindestens eine Faserlage während oder unmittelbar nach dem Umformen, des Anlegens eines Unterdrucks in dem Zwischenraum zwischen der luftdichten Folie und der Drapierform, des Aktivierens des Bindemittels und des Aufhebens des Unterdrucks nach Aushärtung des Bindemittels aufweist.

Eine Drapierform ist eine auch als Matrize bekannte Einrichtung, die mindestens eine Auflagefläche besitzt, auf welche Verstärkungsfasern abgelegt werden können. Die Auflagefläche der Drapierform bestimmt dabei die spätere Oberfläche des hergestellten Vorformlings. Im Kontext der Erfindung kann die Drapierform eine komplexe geometrische Gestalt aufweisen, die folglich auch komplexer geformte Vorformlinge erlaubt. Wie weiter nachfolgend ausgeführt wird, sind insbesondere Strukturbauteile mit einem zumindest teilweisen T-förmigen Querschnitt mit dieser Drapierform herstellbar.

Die Auflagefläche kann zur Verbesserung der Ablösung eines Vorformlings eine glatte Oberfläche aufweisen, auf die auch eine Trennlage aufbringbar ist. Weiterhin kann die Auflagefläche eine Flächenerstreckung aufweisen, die die Erstreckung des herzustellenden Vorformlings übersteigt. Zum Einen erlaubt dies eine bessere Handhabung einer auf dem Vorformling aufbringbaren Folie, zum Anderen kann das mindestens eine Umformelement ebenso eine größere Abmessung aufweisen, als der herzustellende Vorformling und ungleichmäßig umgeformte Stellen am Rand des Vorformlings vermeiden. Desweiteren wird dadurch ein Randstreifen ermöglicht, der mit einer separaten Dichtung ausstattbar ist, die zur Abdichtung der Folie auf der Auflagefläche verwendbar ist.

Die mindestens eine Faserlage, die auf die Drapierform aufgebracht wird, weist ein Bindemittel auf. Das Bindemittel könnte insbesondere ein thermoplastisches Material sein, welches die einzelnen Verstärkungsfasern umgibt. Durch Erwärmen der Faserlage kann das Bindemittel aufgeschmolzen werden, um nach einer erneuten Abkühlung in der durch Umformen hergestellten Form verbleibt. Die in das Bindemittel eingebetteten Verstärkungsfasern weisen eine vergleichsweise geringe Formstabilität auf, welche das Umformen ermöglicht.

Es wäre weiterhin möglich, duroplastische Bindemittel einzusetzen. Diese könnten durch Wärmebehandlung vorvernetzt werden, so dass hierdurch eine ausreichende Formstabilität gewährleistet wird, die das Beibehalten der Form der Fasern gewährleistet.

Zum Umformen der mindestens einen Faserlage wird das mindestens eine Umformelement entlang der Drapierform verfahren. Hierbei werden im Flächenkontakt mit dem Umformelement die Verstärkungsfasern auf die gewünschte Weise mechanisch in ihre gewünschte Form gebogen. Es ist verständlich, dass je nach Komplexität des herzustellenden Vorformlings auch eine Mehrzahl von Umformelementen eingesetzt werden könnte. Diese könnten nacheinander als eine Kette von Umformelementen entlang der Drapierform verfahrbar sein. Je nach Ausführung der Drapierform können diese unterschiedliche Kontaktflächen, Bautypen, Größen, insbesondere Breiten, unterschiedliche vorgesehene Druckkräfte und Ähnliches besitzen. Ziel ist, die Verstärkungsfasern so anzuordnen und auszurichten, dass die gewünschten lokalen Dicken erreicht werden und eine präzise Anpassung an die Drapierform erlaubt.

Ein wesentlicher Schritt ist das Aufbringen einer luftdichten Folie auf die mindestens eine Faserlage, während oder unmittelbar nach dem Umformen sowie das Anlegen eines Unterdrucks in dem Zwischenraum zwischen der luftdichten Folie und der Drapierform. Dadurch wird die umgeformte mindestens eine Faserlage in ihrer vorgesehenen Form festgehalten, indem der Umgebungsdruck auf die Folie wirkt und folglich die Folie ein elastisches Zurückfedern der Verstärkungsfasern verhindert.

Nach dem Fixieren des Verbundes aus Verstärkungsfasern auf der Drapierform kann das Bindemittel aktiviert werden, so dass nach der darauffolgenden Aushärtung des Bindemittels sämtliche Verstärkungsfasern ihre eingenommene Form behalten. Das Aktivieren könnte etwa das Erhitzen des Verbundes aus Verstärkungsfasern beinhalten, so dass ein thermoplastisch ausgeführtes Bindemittel aufschmilzt und nach Abkühlen des Verbundes in dieser Position erhärtet.

Insgesamt kann das erfindungsgemäße Verfahren eine hochautomatisierbare, effiziente Möglichkeit bereitstellen, dreidimensionale Vorformlinge aus Verstärkungsfasern herzustellen, insbesondere komplex geformte Vorformlinge auf ungewebten Fasern, in einem industriellen Maßstab.

In einer besonders bevorzugten Ausführungsform wird die mindestens eine Faserlage als ein Fasergelege bereitgestellt. Ein Fasergelege bezeichnet ein Flächengebilde aus Verstärkungsfasern, die nicht gekräuselt bzw. nicht wellig sind. Ein Fasergelege wird bevorzugt mit parallel zueinander verlaufenden Faserbündeln ausgestattet, wobei auch einzelne Bündel oder Stränge miteinander verwirkt sein können, um die Handhabbarkeit solcher Fasergelege zum Einbringen in die Drapierform zu erhöhen.

Selbstverständlich ist die Erfindung nicht auf die Verwendung von Fasergelegen beschränkt, sondern es können auch Fasergewebe eingesetzt werden. Fasergewebe unterscheiden sich von Fasergelegen durch die verwobene Struktur von Faserbündeln, so dass Gewebe zwangsläufig Verstärkungsfasern in mindestens zwei unterschiedlichen Ausrichtungen aufweisen.

In einer vorteilhaften Ausführungsform sind mehrere Sauganschlüsse auf der Drapierform verteilt und das Anlegen des Unterdrucks umfasst das selektive Beaufschlagen einzelner Sauganschlüsse oder Gruppen von Sauganschlüssen mit dem Unterdruck. Insbesondere bei größeren herzustellenden Vorformlingen empfiehlt es sich, lokal unterschiedliche Bereiche selektiv evakuieren zu können. Die notwendige Absaugleistung und die Geräuschentwicklung bei der Durchführung des Verfahrens können dadurch optimiert werden. Das selektive Evakuieren könnte sowohl das selektive Evakuieren entlang der Verfahrbewegung des mindestens einen Umformelements umfassen als auch in einer Richtung quer zu der Verfahrbewegung. Zum isolierten Beaufschlagen einzelner Sauganschlüsse oder einzelner Gruppen von Sauganschlüssen mit dem Unterdruck kann vorgesehen sein, durch eine selektiv entfernbare Abdeckung einzelne Sauganschlüsse abzudecken. Dies könnte durch einen oder mehrere Folienstreifen erfolgen, die an den zu evakuierenden Abschnitten von den Sauganschlüssen entfernt werden.

In einer besonders vorteilhaften Ausführungsform sind mehrere Sauganschlüsse auf der Drapierform verteilt und das Anlegen des Unterdrucks umfasst das sukzessive Beaufschlagen einzelner Sauganschlüsse oder Gruppen von Sauganschlüssen mit dem Unterdruck unterhalb eines umgeformten Bereichs. Wird beim Umformen stets ein bestimmter Weg entlang der Drapierform zurückgelegt, wobei vor dem mindestens einen Umformelement die Verstärkungsfasern noch nicht umgeformt sind und hinter dem mindestens einen Umformelement die Verstärkungsfasern bereits verformt sind, kann sich das Nachführen der Beaufschlagung von Sauganschlüssen mit Unterdruck anbieten. Die bereits umgeformten Bereiche können durch den einwirkenden Unterdruck damit unmittelbar fixiert werden, um später oder gleichzeitig das Bindemittel zu aktivieren und auszuhärten. Auch hier könnte sich das Einsetzen eines oder mehrerer luftdichter Folienstreifen anbieten, die die einzelnen Sauganschlüsse verschließen und direkt bei der Verfahrbewegung des mindestens einen Umformelements von lokalen Sauganschlüssen entfernt werden.

Das mindestens eine Umformelement kann eine Rolle aufweisen, die entlang mindestens einer Umformstrecke auf der mindestens einen Faserlage gerollt wird. Damit wird eine sich entlang des Verfahrwegs wiederholende, gleichmäßige Form des Vorformlings realisiert. Eine Rolle muss nicht zwangsläufig entlang ihrer Rotationsachse einen konstanten Durchmesser aufweisen. Vielmehr sind auch Verläufe und Abstufungen denkbar, je nach Anforderung. Des Weiteren ist denkbar, mehrere Rollen hintereinander einzusetzen, welche beispielsweise unterschiedliche Breiten, Durchmesser und dergleichen besitzen und entlang unterschiedlicher Bereiche entlang der Drapierform verfahren wird. Eine Rolle kann sowohl starr, als auch elastisch ausgeführt sein. Die Umfangsfläche der Rolle kann so nachgiebig sein, dass Vertiefungen und Auswölbungen in der Drapierform leicht von der Rolle berücksichtigt werden können. Zum Beispiel kann die Rolle eine nachgiebige äußere Lage in der Art von Moosgummi oder einem ähnlichen Werkstoff enthalten.

Des Weiteren kann das mindestens eine Umformelement mindestens ein Formelement aufweisen, das mit einer Andrückfläche gleitend auf der mindestens einen Faserlage bewegt wird. Die Andrückfläche hat den besonderen Vorteil, dass eine komplexere Formgebung im Vergleich zu einer Rolle gestaltet werden kann. In besonderen Fällen könnte es etwa notwendig sein, Verstärkungsfasern entlang des Verfahrwegs des mindestens einen Umformelements quer zu dem Verfahrweg auszubreiten und auf die Drapierform zu drücken. Die Andrückfläche könnte hierzu einen schmalen Einlaufbereich, der zu dem unverformten Bereich von Verstärkungsfasern gerichtet ist, und einen breiteren Auslaufbereich aufweisen, an den die verformten Verstärkungsfasern anschließen. Eine Andrückfläche könnte daher ähnlich wie ein Schiffsrumpf oder ein Pflug gestaltet sein, was zu einer deutlich seitwärts gerichteten Verformung führt, die mit einer Rolle schwer durchführbar ist. Selbstverständlich können auch Rollen und Formelemente vorgesehen sein, die sich gegenseitig ergänzen.

Das mindestens eine Umformelement kann weiterhin auch federnd oder flexibel aufgehängt sein. Dadurch kann das Überfahren komplexerer Formen mit ausgeprägten Erhebungen und Senken unter sanftem Andrücken der Fasern auf die Drapierfläche weiter unterstützt werden.

Es ist zusätzlich denkbar, das mindestens eine Umformelement auch relativ zu der Vorschubeinrichtung zu bewegen, beispielsweise durch ein Neigen, Kippen, Drehen, Tordieren, seitliches oder vertikales Verfahren oder dergleichen. Dadurch wird die Flexibilität zur Bewältigung möglicher Strukturen der Drapierform noch weiter verbessert.

Besonders vorteilhaft weist das Aufbringen der luftdichten Folie das Abrollen der Folie und das Positionieren der abgerollten Folie auf dem Vorformling mit Hilfe einer Umlenkwalze auf. Die Umlenkwalze kann knapp oberhalb des Vorformlings positioniert werden oder derart, dass sie gleichzeitig auch als eine Rolle zum Umformen genutzt werden kann. Die Umlenkwalze sollte insbesondere erst nach Durchlaufen mit sämtlichen weiteren Umformelementen die Folie aufbringen.

Bevorzugt schließt die Umlenkwalze das Umformen der mindestens einen Faserlage ab. Je nach Form der Auflagefläche könnten beispielsweise Randbereiche oder der gesamte Verbund aus Verstärkungsfasern mit der Umlenkwalze überfahren werden, sodass direkt im Anschluss an das Umformen bzw. das Anwalzen die Folie aufgebracht wird.

Es ist hierbei darauf hingewiesen, dass unmittelbar nach dem Aufbringen der Folie ein lokales Beaufschlagen mit dem Unterdruck erfolgen kann, wie vorangehend dargelegt.

Die Drapierform ist in zwei Hälften unterteilt, die zum Ausbilden eines Spalts zueinander bewegbar sind, wobei das Einbringen der mindestens einen Faserlage das Öffnen des Spalts auf ein erstes Spaltmaß, das Einbringen der mindestens einen Faserlage in den Spalt zwischen den beiden Hälften der Drapierform sowie das Verringern des Spaltmaßes auf ein zweites Spaltmaß umfasst, das die Stärke eines Stegs des Vorformlings bestimmt. Die Drapierform kann entlang des gesamten Verfahrwegs in zwei Hälften unterteilt werden oder nur abschnittsweise, abhängig von der konkreten Ausgestaltung des herzustellenden Vorformlings. Werden beide Hälften der Drapierform zum Ausbilden eines Spalts voneinander beabstandet, kann die mindestens eine Faserlage in diesen Spalt eingebracht werden, um den Spalt dann auf ein vorbestimmtes Maß zu reduzieren, das die spätere Stärke des Stegs des Vorformlings bestimmt. Im Anschluss hieran können ein oder mehrere Umformelemente über die Drapierform bewegt werden, sodass die aus dem Spalt hervorstehenden Verstärkungsfasern insbesondere seitlich, d. h. quer zu der Verfahrbewegung, umgeformt werden. Hieraus kann sehr leicht ein T-förmiges Verstärkungsprofil erzeugt werden.

Die Unterteilung kann dafür verwendet werden, den Vorformling nach dessen Fertigstellung zu lagern. Die Folie kann auf dem Vorformling verbleiben und der Vorformling kann sich den beiden Hälften der Drapierform verbleiben. Diese könnten der entsprechenden Vorrichtung entnommen und an anderem Ort zwischengelagert werden. Durch die verbliebene Folie und die seitlich angeordneten Hälften der Drapierform kann ein sehr guter Schutz vor mechanischer Beschädigung und vor einer Verschmutzung bewirkt werden.

Zudem können die Hälften der Drapierform auch als Positionierhilfe verwendet werden. Damit könnten beispielhaft Vorformlinge für T-Stringer auf einer trockenen Flügel-Haut positioniert werden. Die Hälften könnten des Weiteren auch als Druckstücke eingesetzt werden. Beispielsweise könnten diese Druckstücke für T-Stringer-Vorformlinge für die gemeinsame Infusion und Härtung von T-Stringer-Vorformlingen und Flügelhaut eingesetzt werden.

Das Aktivieren des Bindemittels kann das Erwärmen der Drapierform aufweisen, wobei das Bindemittel ein Thermoplast ist. Durch die Erwärmung der Drapierform, beispielsweise mittels einer elektrischen Widerstandsheizung, kann das Bindemittel der mindestens einen Faserlage gleichmäßig erwärmt werden. Es könnte sich anbieten, die Drapierform in der Nähe der Auflagefläche mit Temperatursensoren auszustatten, so dass eine optimale Temperaturregelung und Überwachung erfolgen kann. Insbesondere wäre bei dieser Variante darauf zu achten, dass zuverlässig eine Schmelztemperatur des Bindemittels erreicht bzw. überschritten wird und durch Auswerten eines Temperaturverlaufs das Erstarren des Bindemittels erkannt werden kann.

Das Verfahren kann zusätzlich das Halten einer vorbestimmten Temperatur für eine vorbestimmte erste Dauer aufweisen, so dass das Bindemittel vollständig aufschmilzt, und zusätzlich das Abkühlen der Drapierform bei angelegtem Unterdruck für eine vorbestimmte zweite Dauer. Durch das Einstellen der vorbestimmten Zeitdauern kann, abhängig von der Dicke der mindestens einen Faserlage, sichergestellt werden, dass das Bindemittel zuverlässig über die gesamte Stärke des Vorformlings aufschmilzt und anschließend über die gesamte Stärke des Vorformlings auch wieder aushärtet. Die entsprechenden Zeitdauern könnten experimentell ermittelt und beispielsweise mit einem zusätzlichen Sicherheitsfaktor versehen werden.

Die Erfindung betrifft ferner eine Vorrichtung zum Herstellen eines dreidimensionalen Vorformlings aus Verstärkungsfasern zur Herstellung eines Bauteils aus einem faserverstärkten Kunststoff, aufweisend eine Drapierform, mindestens ein Umformelement, mindestens eine Vorschubeinrichtung, eine luftdichte Folie, eine Unterdruckeinrichtung und eine Aktivierungseinrichtung, wobei die Drapierform eine Aufnahmefläche zum Aufnehmen mindestens einer Lage aus ein Bindemittel aufweisenden Verstärkungsfasern aufweist, wobei das mindestens eine Umformelement mit der mindestens einen Vorschubeinrichtung gekoppelt ist, um das mindestens eine Umformelement entlang der Drapierform zu verfahren, wobei die Unterdruckeinrichtung pneumatisch mit einem Zwischenraum zwischen der Aufnahmefläche und der Folie koppelbar ist, in dem die Verstärkungsfasern bringbar sind, um Verstärkungsfasern in ihrer umgeformten Form zu halten, und wobei die Aktivierungseinrichtung dazu ausgebildet ist, ein in den Verstärkungsfasern befindliches Bindemittel zu aktivieren. Diese Vorrichtung kann das vorangehend beschriebene erfindungsgemäße Verfahren ausführen.

Wie ebenfalls vorangehend erwähnt, kann die Aktivierungseinrichtung eine Heizeinrichtung sein. Diese ist etwa in der Drapierform angeordnet. Zur optimalen Wärmeleitung kann es sich anbieten, die Drapierform zumindest teilweise aus einem metallischen Material herzustellen, so dass durch Gewährleistung einer guten Wärmeleitfähigkeit zwischen der Heizeinrichtung und einer Auflagefläche die Heizleistung optimiert wird.

Wie ebenfalls vorangehend erwähnt, ist die Drapierform in zwei Hälften unterteilt, die zum Ausbilden eines variabel geöffneten Spalts mit mindestens einem ersten Spaltmaß und einem zweiten Spaltmaß zueinander bewegbar sind, um mindestens eine Faserlage in den Spalt einzubringen.

Eine Erwärmung kann auch durch eine Art Temperierschlitten erfolgen, die an der Vorrichtung angeordnet ist und mit der Vorschubeinrichtung verfahrbar ist. Für das Verfahren kann es sich auch anbieten, eine Heizeinrichtung, beispielsweise in Form eines Temperierschlittens, an der Drapierform unmittelbar an den Bereichen entlang zu bewegen, sobald die Folie aufgebracht und das Vakuum angelegt ist. Folglich kann die Herstellung in einem geschlossenen, koninuierlichen Prozess erfolgen.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1 zeigt eine erfindungsgemäße Vorrichtung, auf der das erfindungsgemäße Verfahren ausgeführt wird in einem Längsschnitt.
Fig. 2 zeigt eine Schnittdarstellung der Vorrichtung in einem Querschnitt.
Fig. 3 zeigt ein Ablaufdiagramm des erfindungsgemäßen Verfahrens.

### DETAILLIERTE DARSTELLUNG EXEMPLARISCHER AUSFÜHRUNGSFORMEN

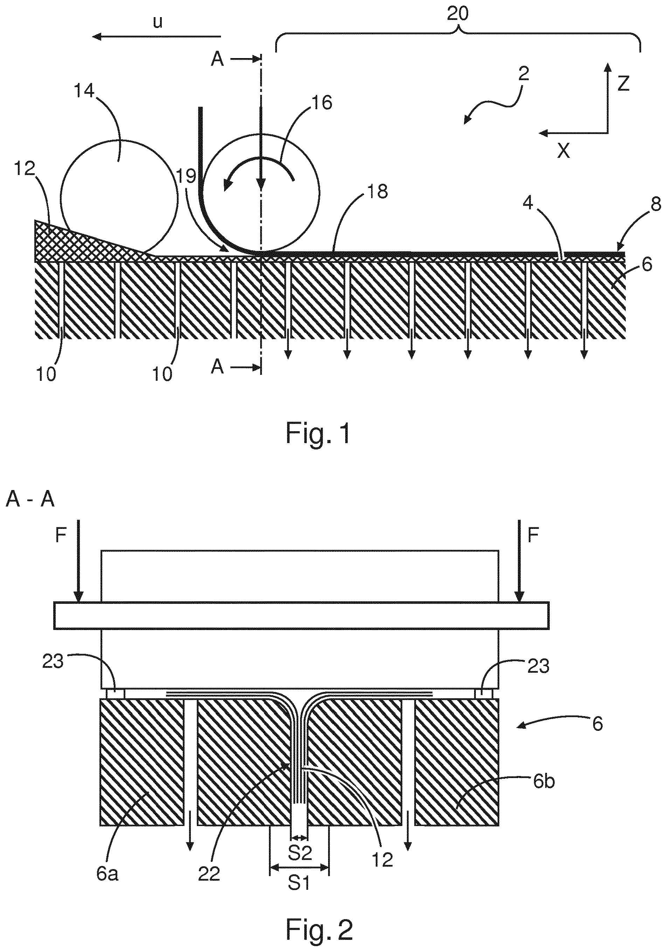

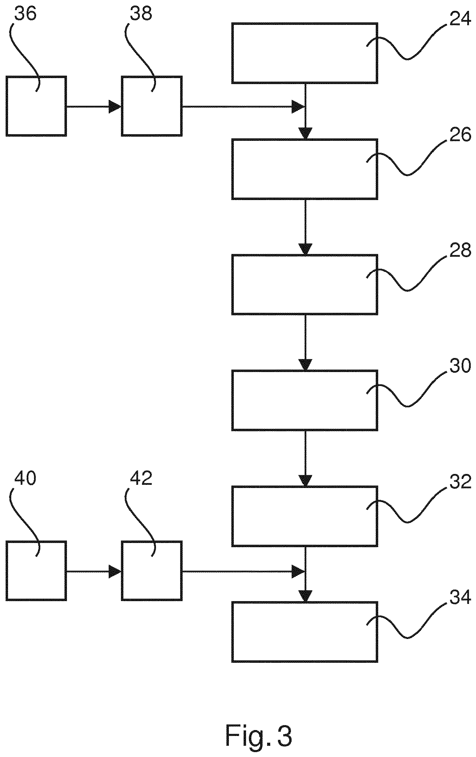

Fig. 1 zeigt eine Vorrichtung 2 zum Herstellen eines dreidimensionalen Vorformlings 4 aus Verstärkungsfasern, wobei mit der Vorrichtung 2 ein vorangehend erläutertes und in Fig. 3 dargestelltes Verfahren zum Herstellen eines dreidimensionalen Vorformlings 4 ausgeführt wird. Es wird eine Drapierform 6 gezeigt, die eine Auflagefläche 8 besitzt. Mehrere Sauganschlüsse 10 sind in der Drapierform 6 verteilt und können eine Fluidverbindung zwischen einer Unterdruckeinrichtung (nicht gezeigt) und der Auflagefläche 8 herstellen. Da Fig. 1 eine schematische Darstellung enthält, ist die geometrische Drapierform 6 sehr einfach gewählt. Deutlich komplexere Formen sind jedoch ebenso möglich.

Eine aus ungewellten, geraden und parallel zueinander verlaufenden Verstärkungsfasern ("non crimp fabric", NCF) bestehende Faserlage 12 ist auf der Auflagefläche 8 aufgebracht und ist zunächst noch ohne spezifische Form (linke Seite in der Zeichnungsebene). Durch mindestens ein Umformelement 14, welches hier beispielhaft als eine Rolle ausgeführt ist, kann aus den ungeformten Verstärkungsfasern 12 der Vorformling 4 geformt werden. Hierzu wird das mindestens eine Umformelement 14 entlang einer Umformstrecke u bewegt.

Mittels einer Umlenkwalze 16 wird eine luftdichte Folie 18, die aus einem nicht dargestellten Folienreservoir stammt, auf den bereits umgeformten Bereich 20 aufgebracht. Die Umlenkwalze 16 kann auf die mindestens eine Faserlage 12 drücken, um das Umformen abzuschließen. Alternativ kann auch ein gewisser Abstand zu der Faserlage 12 eingenommen werden, so dass die Umlenkwalze 16 die bereits hergestellte Form mechanisch nicht mehr beeinflusst. Durch das anschließende Anlegen eines Unterdrucks an den Sauganschlüssen 10 des umgeformten Bereichs 20 und damit in einen Zwischenraum 19 zwischen der Drapierform 6 und der Folie 18 wird die Folie 18 auf den umgeformten Bereich 20 angedrückt, sodass dieser seine Form beibehält.

Fig. 2 zeigt einen Schnitt durch die Umlenkwalze 16 und die Drapierform 6. Hier ist erkennbar, dass die Drapierform 6 in zwei Hälften 6a und 6b unterteilt ist, die einen variablen Abstand zueinander einnehmen können. In der gezeigten Darstellung in Fig. 2 befinden sich die beiden Hälften 6a und 6b in einer Position, die einem zweiten Spaltmaß entspricht. Dieses ist in Fig. 2 mit S2 bezeichnet. Bei dem zweiten Spaltmaß S2 sind die Verstärkungsfasern 12 bereits so zusammengedrückt, dass die spätere Stärke eines Stegs 22 bestimmt wird. Zum Einführen von ungeformten Verstärkungsfasern 12 können die beiden Hälften 6a und 6b in eine andere Position gebracht werden, die einem ersten Spaltmaß S1 entspricht. Hier ist der Abstand zwischen den beiden Hälften 6a und 6b etwas größer, so dass sehr leicht die Verstärkungsfasern 12 eingesteckt werden können. Die Verstärkungsfasern 12 sind in Fig. 2 bereits vollständig umgeformt, d. h. es bildet sich ein T-förmiger Profilquerschnitt. An Randbereichen der Drapierform 6 können Dichtstreifen 23 angeordnet werden, welche die Abdichtung mit der Folie 18 auf der Auflagefläche 8 unterstützen.

Fig. 3 zeigt schließlich eine blockbasierte Darstellung des erfindungsgemäßen Verfahrens. Das Verfahren beginnt mit dem Einbringen 24 von mindestens einer Bindemittel aufweisenden Faserlage 12 in eine Drapierform 6, wonach sich das Umformen 26 der mindestens einen Faserlage 12 durch mindestens ein Umformelement 14, das entlang der Drapierform 6 verfahrbar ist, anschließt. Danach wird eine luftdichte Folie 18 auf die mindestens eine Faserlage 12 während oder unmittelbar nach dem Umformen 26 aufgebracht 28 und ein Unterdruck wird in den Zwischenraum zwischen der luftdichten Folie 18 und der Drapierform 6 angelegt 30. Es folgt das Aktivieren 32 des Bindemittels, etwa in Form einer Erwärmung, und anschließend das Aufheben 34 des Unterdrucks nach Aushärtung des Bindemittels. Das Einbringen 24 der mindestens einen Bindemittel aufweisenden Faserlage 12 kann das Öffnen 36 eines Spalts zwischen zwei Hälften 6a und 6b der Drapierform 6 sowie das Verringern 38 des Spaltmaßes auf ein zweites Spaltmaß aufweisen. Vor dem Aufheben des Unterdrucks kann eine vorbestimmte Temperatur für eine vorbestimmte erste Dauer T1 gehalten werden 40, sodass das Bindemittel vollständig aufschmilzt und zusätzlich kann das Abkühlen 42 der Drapierform 6 bei angelegtem Unterdruck für eine vorbestimmte zweite Dauer T2 aufweisen.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Verfahren zum Herstellen eines dreidimensionalen Vorformlings (4) aus Verstärkungsfasern zur Herstellung eines Bauteils aus einem faserverstärkten Kunststoff, aufweisend die Schritte:
- Einbringen (24) mindestens einer Bindemittel aufweisenden Faserlage (12) in eine Drapierform (6),
- Umformen (26) der mindestens einen Faserlage (12) durch mindestens ein Umformelement (14), das entlang der Drapierform (6) verfahrbar ist,
- Aufbringen (28) einer luftdichten Folie (18) auf die mindestens eine Faserlage (12) während oder unmittelbar nach dem Umformen (26),
- Anlegen (30) eines Unterdrucks in dem Zwischenraum (19) zwischen der luftdichten Folie (18) und der Drapierform (6),
- Aktivieren (32) des Bindemittels und
- Aufheben (34) des Unterdrucks nach Aushärtung des Bindemittels,
**dadurch gekennzeichnet, dass** die Drapierform (6) in zwei Hälften (6a, 6b) unterteilt ist, die zum Ausbilden eines Spalts zueinander bewegbar sind, wobei das Einbringen (24) der mindestens einen Faserlage (12) das Öffnen (36) des Spalts auf ein erstes Spaltmaß (S1), das Einbringen der mindestens einen Faserlage (12) in den Spalt zwischen den beiden Hälften (6a, 6b) der Drapierform (6) sowie das Verringern (38) des Spaltmaßes auf ein zweites Spaltmaß (S2) umfasst, das die Stärke eines Stegs (22) des Vorformlings (4) bestimmt.

2. Verfahren nach Anspruch 1, wobei die mindestens eine Faserlage (12) als ein Fasergelege bereitgestellt wird.

3. Verfahren nach Anspruch 1 oder 2, wobei mehrere Sauganschlüsse (10) auf der Drapierform (6) verteilt sind und das Anlegen (30) des Unterdrucks das selektive Beaufschlagen einzelner Sauganschlüsse (10) oder Gruppen von Sauganschlüssen (10) mit dem Unterdruck umfasst.

4. Verfahren nach einem der vorhergehenden Ansprüche, wobei mehrere Sauganschlüsse (10) auf der Drapierform (6) verteilt sind und das Anlegen (30) des Unterdrucks das sukzessive Beaufschlagen einzelner Sauganschlüsse (10) oder Gruppen von Sauganschlüssen (10) mit dem Unterdruck unterhalb eines bereits umgeformten Bereichs (20) umfasst.

5. Verfahren nach einem der vorhergehenden Ansprüche, wobei das mindestens eine Umformelement (14) eine Rolle (14) aufweist, die entlang mindestens einer Umformstrecke (u) auf der mindestens einen Lage gerollt wird.

6. Verfahren nach einem der vorhergehenden Ansprüche, wobei das mindestens eine Umformelement (14) mindestens ein Formelement aufweist, das mit einer Andrückfläche gleitend auf der mindestens einen Faserlage (12) bewegt wird.

7. Verfahren nach einem der vorhergehenden Ansprüche, wobei das Aufbringen der luftdichten Folie (18) das Abrollen der Folie (18) und das Positionieren der abgerollten Folie (18) auf dem Vorformling (4) mit Hilfe einer Umlenkwalze (16) aufweist.

8. Verfahren nach Anspruch 7, wobei die Umlenkwalze (16) das Umformen der mindestens einen Faserlage (12) abschließt.

9. Verfahren nach einem der vorhergehenden Ansprüche, wobei das Aktivieren des Bindemittels das Erwärmen (32) der Drapierform (6) aufweist, wobei das Bindemittel ein Thermoplast ist.

10. Verfahren nach Anspruch 9, wobei das Verfahren zusätzlich das Halten (40) einer vorbestimmten Temperatur für eine vorbestimmte erste Dauer (T1) aufweist, so dass das Bindemittel vollständig aufschmilzt, und
wobei das Verfahren zusätzlich das Abkühlen (42) der Drapierform (6) bei angelegtem Unterdruck für eine vorbestimmte zweite Dauer (T2) aufweist.

11. Vorrichtung (2) zum Herstellen eines dreidimensionalen Vorformlings (4) aus Verstärkungsfasern zur Herstellung eines Bauteils aus einem faserverstärkten Kunststoff, aufweisend:
- eine Drapierform (6),
- mindestens ein Umformelement (14),
- mindestens eine Vorschubeinrichtung,
- eine luftdichte Folie (18),
- eine Unterdruckeinrichtung und
- eine Aktivierungseinrichtung,
wobei die Drapierform (6) eine Aufnahmefläche (8) zum Aufnehmen mindestens einer Lage (12) aus ein Bindemittel aufweisenden Verstärkungsfasern aufweist,
wobei das mindestens eine Umformelement (14) mit der mindestens einen Vorschubeinrichtung gekoppelt ist, um das mindestens eine Umformelement (14) entlang der Drapierform (6) zu verfahren,
wobei die Unterdruckeinrichtung pneumatisch mit einem Zwischenraum (19) zwischen der Aufnahmefläche (8) und der Folie (18) koppelbar ist, in den die Verstärkungsfasern bringbar sind, um Verstärkungsfasern in ihrer umgeformten Form zu halten, und
wobei die Aktivierungseinrichtung dazu ausgebildet ist, ein in den Verstärkungsfasern befindliches Bindemittel zu aktivieren,
**dadurch gekennzeichnet, dass** die Drapierform (6) in zwei Hälften (6a, 6b) unterteilt ist, die zum Ausbilden eines variabel geöffneten Spalts mit mindestens einem ersten Spaltmaß (S1) und einem zweiten Spaltmaß (S2) zueinander bewegbar sind, um mindestens eine Faserlage (12) in den Spalt einzubringen.

12. Vorrichtung nach Anspruch 11, wobei die Aktivierungseinrichtung eine Heizeinrichtung ist.

## Claims

1. Method of making a three-dimensional preform (4) of reinforcing fibres for the manufacture of a component from a fibre-reinforced plastic, comprising the steps:
- Introducing (24) at least one fibre layer (12) comprising binder into a drape mould (6);
- Forming (26) of the at least one fibre layer (12) by at least one forming element (14) which can be moved along the drapery mould (6);
- Application (28) of an airtight film (18) to the at least one fibre layer (12) during or immediately after forming (26);
- Applying (30) a vacuum to the space (19) between the airtight film (18) and the drape form (6);
- Activating (32) the binder; and
- Removing (34) the vacuum after the binder has cured,
**characterised in that** the drapery mould (6) is divided into two halves (6a, 6b) which are movable relative to one another to form a gap, wherein the introduction (24) of the at least one fibre layer (12) comprises opening the gap (36) to a first gap dimension (S1), introducing the at least one fibre layer (12) into the gap between the two halves (6a, 6b) of the drape mould (6), and reducing (38) the gap dimension to a second gap dimension (S2) which determines the thickness of a web (22) of the preform (4).

2. The method according to claim 1, wherein the at least one fibre layer (12) is provided as a fibre scrim.

3. A method according to claim 1 or 2, wherein a plurality of suction ports (10) are distributed on the drapery mould (6) and the application (30) of the vacuum comprises selectively applying the vacuum to individual suction ports (10) or groups of suction ports (10).

4. A method according to any of the preceding claims, wherein a plurality of suction ports (10) are distributed on the drapery mould (6) and the application (30) of the vacuum comprises successively applying the vacuum to individual suction ports (10) or groups of suction ports (10) below an already formed area (20).

5. A method according to any of the preceding claims, wherein the at least one forming element (14) comprises a roll (14) which is rolled along at least one forming section (u) on the at least one layer.

6. A method according to any of the preceding claims, wherein the at least one forming element (14) comprises at least one forming element which is slidably moved on the at least one fibre layer (12) with a pressing surface.

7. A method according to any of the preceding claims, wherein the application of the airtight film (18) comprises unrolling the film (18) and positioning the unrolled film (18) on the preform (4) by means of a deflection roller (16).

8. A method according to claim 7, wherein the deflection roller (16) completes the forming of the at least one fibre layer (12).

9. A method according to any of the preceding claims, wherein activating the binder comprises heating (32) the drape mould (6), wherein the binder is a thermoplast.

10. A method according to claim 9, wherein the method additionally comprises maintaining (40) a predetermined temperature for a predetermined first duration (T1) such that the binder melts completely, and
wherein the method additionally comprises cooling (42) the drapery mould (6) during vacuum is applied for a predetermined second duration (T2).

11. An apparatus (2) for making a three-dimensional preform (4) of reinforcing fibres for manufacturing a component from a fibre-reinforced plastic, comprising:
- a drape mould (6),
- at least one forming element (14),
- at least one feeding device,
- an airtight film (18),
- a vacuum device, and
- an activation device,
wherein the drape mould (6) comprises a receiving surface (8) for receiving at least one layer (12) of reinforcing fibres comprising a binder,
wherein the at least one forming element (14) is coupled to the at least one feeding device in order to move the at least one forming element (14) along the drapery mould (6), wherein the vacuum device is pneumatically couplable to a space (19) between the receiving surface (8) and the film (18) into which the reinforcing fibres can be introduced in order to keep reinforcing fibres in their formed shape, and
wherein the activation means is adapted to activate a binder present in the reinforcing fibres,
**characterised in that** the drapery mould (6) is divided into two halves (6a, 6b) which are movable relative to one another to form a variably open gap with at least a first gap dimension (S1) and a second gap dimension (S2) in order to introduce at least one fibre layer (12) into the gap.

12. A device according to claim 11, wherein the activation device is a heating device.

## Revendications

1. Procédé de fabrication d'une préforme tridimensionnelle (4) en fibres de renforcement pour la fabrication d'un composant en matière plastique renforcée de fibres, comprenant les étapes
- introduction (24) d'au moins une couche de fibres (12) comprenant un liant dans un moule de drapé (6),
- Formation (26) d'au moins une couche de fibres (12) par au moins un élément de formage (14) qui peut être déplacé le long du moule à draperie (6),
- Application (28) d'une feuille étanche à l'air (18) sur au moins une couche de fibres (12) pendant ou immédiatement après le formage (26),
- Appliquer (30) un vide dans l'espace (19) entre le film étanche (18) et le moule de drapage (6),
- Activation (32) du classeur et
- Libération (34) du vide après durcissement du liant,
**caractérisé en ce que** le moule à draperie (6) est divisé en deux moitiés (6a, 6b) qui sont mobiles l'une par rapport à l'autre pour former une fente, dans lequel l'introduction (24) de la au moins une couche de fibres (12) provoque l'ouverture de la fente (36) à une première dimension de fente (S1), comprend l'introduction d'au moins une couche de fibres (12) dans l'espace entre les deux moitiés (6a, 6b) du moule de drapé (6) et la réduction (38) de la dimension de l'espace à une deuxième dimension de l'espace (S2) qui détermine l'épaisseur d'une bande (22) de la préforme (4).

2. Le procédé selon la revendication 1, dans lequel la au moins une couche de fibres (12) est fournie sous la forme d'une grille de fibres.

3. Un procédé selon la revendication 1 ou 2, dans lequel une pluralité d'orifices d'aspiration (10) sont répartis sur le moule à draperie (6) et l'application (30) du vide comprend l'application sélective du vide à des orifices d'aspiration individuels (10) ou à des groupes d'orifices d'aspiration (10).

4. Procédé selon l'une des revendications précédentes, dans lequel une pluralité d'orifices d'aspiration (10) sont répartis sur le moule à draperie (6) et l'application (30) du vide consiste à appliquer successivement le vide sur des orifices d'aspiration (10) individuels ou des groupes d'orifices d'aspiration (10) en dessous d'une zone déjà formée (20).

5. Procédé selon l'une des revendications précédentes, dans lequel le au moins un élément de formage (14) comprend un rouleau (14) qui est laminé le long d'au moins une section de formage (u) sur la au moins une couche.

6. Procédé selon l'une des revendications précédentes, dans lequel le au moins un élément de formage (14) comprend au moins un élément de formage qui est déplacé de manière coulissante avec une surface de pression sur la au moins une couche de fibres (12).

7. Procédé selon l'une des revendications précédentes, dans lequel l'application du film étanche à l'air (18) comprend le déroulement du film (18) et le positionnement du film déroulé (18) sur la préforme (4) au moyen d'un rouleau de déviation (16).

8. Procédé selon la revendication 7, dans lequel le rouleau de déviation (16) achève la formation d'au moins une couche de fibres (12).

9. Procédé selon l'une des revendications précédentes, dans lequel l'activation du liant comprend le chauffage (32) du moule de drapé (6), dans lequel le liant est un thermoplast.

10. Procédé selon la revendication 9, le procédé comprenant en outre le maintien (40) d'une température prédéterminée pendant une première durée prédéterminée (T1) de telle sorte que le liant fonde complètement, et
dans lequel le procédé comprend en outre le refroidissement (42) du moule à draperie (6) sous une pression négative appliquée pendant une seconde durée prédéterminée (T2).

11. Appareil (2) pour la production d'une préforme tridimensionnelle (4) en fibres de renforcement pour la fabrication d'un composant en matière plastique renforcée de fibres, comprenant:
- un moule de drapé (6),
- au moins un élément de formation (14),
- au moins un dispositif d'alimentation,
- un film étanche (18),
- un dispositif à vide, et
- un dispositif d'activation,
dans lequel le moule de drapé (6) présente une surface de réception (8) pour recevoir au moins une couche (12) de fibres de renforcement comprenant un liant,
dans lequel le au moins un élément de formage (14) est couplé au au moins un dispositif d'alimentation afin de déplacer le au moins un élément de formage (14) le long du moule à draperie (6),
le dispositif à vide pouvant être couplé pneumatiquement à un espace (19) entre la surface de réception (8) et la feuille (18) dans lequel les fibres de renforcement peuvent être amenées afin de maintenir les fibres de renforcement dans leur forme déformée, et
dans lequel ledit moyen d'activation est adapté pour activer un liant présent dans lesdites fibres de renforcement,
**caractérisé en ce que** le moule à draperie (6) est divisé en deux moitiés (6a, 6b) qui sont mobiles l'une par rapport à l'autre pour former une fente à ouverture variable avec au moins une première dimension de fente (S1) et une deuxième dimension de fente (S2) afin d'introduire au moins une couche de fibres (12) dans la fente.

12. Appareil selon la revendication 11, dans lequel le dispositif d'activation est un dispositif de chauffage.
